# EUROPÄISCHE PATENTSCHRIFT

(11) **EP 1 915 518 B1**
(45) Veröffentlichungstag und Bekanntmachung des Hinweises auf die Patenterteilung: **15.12.2010**
(21) Anmeldenummer: 06776973.7
(22) Anmeldetag: 18.08.2006
(51) Int. Cl.: F01N 3/20, B01D 53/90, B01D 53/94, C01C 1/08, F01N 3/025

(54) **VORRICHTUNG, REAKTOR UND VERFAHREN ZUR REDUKTION VON STICKOXYDEN IM ABGASSTROM VON VERBRENNUNGSKRAFTMASCHINEN**
DEVICE, REACTOR AND METHOD FOR REDUCING NITROGEN OXIDES IN THE EXHAUST FLOW OF INTERNAL COMBUSTION ENGINES
DISPOSITIF, REACTEUR ET PROCEDE DE REDUCTION D'OXYDES D'AZOTE DANS LES GAZ D'ECHAPPEMENT DE MOTEURS A COMBUSTION INTERNE

(30) Priorität: 20.08.2005 DE 102005039630
(43) Veröffentlichungstag der Anmeldung: 30.04.2008
(73) Patentinhaber: Technische Universität Kaiserslautern, 67663 Kaiserslautern (DE)
(72) Erfinder: MÜLLER, Werner, 67663 Kaiserslautern (DE)
(74) Vertreter: Patentanwälte Möll, Bitterich & Dr. Keller
(86) Internationale Anmeldenummer: PCT/EP2006/008183
(87) Internationale Veröffentlichungsnummer: WO 2007/022926

(56) Entgegenhaltungen:
- EP-A- 0 555 746
- EP-A- 1 052 009
- EP-A- 1 469 173
- EP-A- 1 479 883
- EP-A1- 1 338 562
- DE-A1- 10 251 498
- DE-A1- 19 537 971
- DE-A1- 19 845 944
- FR-A- 2 813 341
- JP-A- 2000 186 532
- JP-A- 2004 052 593
- JP-A- 2005 098 247
- US-A- 5 771 683

## Beschreibung

Vorrichtung, Reaktor und Verfahren zur Reduktion von Stickoxyden im Abgasstrom von Verbrennungskraftmaschinen.

### Technisches Gebiet:

Die Erfindung betrifft einen Reaktor, ein Verfahren und eine Vorrichtung zur Reduktion von Stickoxyden im Abgasstrom von Verbrennungskraftmaschinen gemäß dem Oberbegriff des Patentanspruchs 1, des Patentanspruchs 18 und des Patentanspruchs 33.

Eine weltweite Bevölkerungszunahme, fortschreitende Industrialisierung und steigendes Verkehrsaufkommen sind Ursache für die Zunahme von Schadstoffkonzentrationen in der Umgebungsluft. Von besonderer Bedeutung sind in diesem Zusammenhang Stickoxydemissionen, die in großem Maße auf die Verbrennung von Benzin- und Dieselkraftstoffen in Verbrennungskraftmaschinen zurückzuführen sind. Solche Verbrennungskraftmaschinen können stationär angeordnet sein, wie zum Beispiel in Blockheizkraftwerken, oder aber auch mobiler Art, beispielsweise in Kraftfahrzeugen, Stickoxydemissionen tragen unter anderem zu erhöhten Ozonkonzentrationen in Bodennähe bei.

Um diesen bedenklichen Entwicklungen entgegenzuwirken und aufgrund wiederholter Verschärfung der Schadstoffgrenzwerte durch den Gesetzgeber sind seitens der Industrie stets Anstrengungen unternommen worden, die beim Betrieb von Verbrennungskraftmaschinen entstehenden Stickoxydkonzentrationen zu verringern. Vielversprechend ist dabei die Anwendung des bereits bekannten SCR-Verfahrens, bei dem dem Abgasstrom Ammoniak zugegeben wird. Dabei reduziert Ammoniak die Stickoxyde unter Bildung von Stickstoff, Kohlendioxyd und Wasser.

### Stand der Technik:

Aufgrund des Gefahrenpotentials, das von Ammoniak ausgeht, ist es bereits bekannt, Ammoniak in der für die Durchführung des SCR-Verfahrens notwendigen Menge durch Thermolyse und Hydrolyse aus ungefährlichem Harnstoff herzustellen. Ein dafür geeignetes Verfahren und eine geeignete Vorrichtung ist aus der EP 1 338 562 A1 bekannt, die den Ausgangspunkt für die Erfindung bildet und in der die Grundlagen für die Durchführung der Thermolyse und Hydrolyse von Harnstoff näher erläutert sind. Durch Bezugnahme auf dieses Dokument ist deren Offenbarungsgehalt in vorliegender Anmeldung als mit offenbart anzusehen.

Die EP 1 338 562 A1 offenbart ein Verfahren zur Gewinnung von Ammoniak, bei dem trockener Harnstoff in einem thermischen Reaktor einer Thermolyse unterzogen wird. Unter Einwirkung von Wärme wird dabei Harnstoff in Ammoniak und Isocyansäure aufgespalten. Das dabei entstehende Gasgemisch wird durch anschließende Hydrolyse weiter chemisch aufbereitet, wobei der Bestandteil Isocyansäure in Gegenwart von Wasser katalytisch in Ammoniak und Kohlendioxyd gespalten wird. Das bei der Thermolyse und Hydrolyse gewonnene Ammoniak wird direkt in den Abgasstrom eines Verbrennungsprozesses eingeleitet und dient dort zur Reduktion der Stickoxyde.

Die in der EP 1 338 562 A1 beschriebene Vorrichtung zur Durchführung des Verfahrens umfasst unter anderem einen thermischen Reaktor mit einer Reaktionskammer, die in einen Thermolyseraum und einen Hydrolyseraum unterteilt ist. In dem Thermolyseraum ist ein elektrisches Heizelement angeordnet, das die für die Thermolyse notwendige Wärmeenergie durch Umwandlung elektrischer Energie erzeugt. Mit Hilfe einer Dosiervorrichtung wird trockener Harnstoff in der für die Durchführung des SCR-Verfahrens notwendigen Menge aus einem Vorratsbehälter in den Thermolyseraum des Reaktors eingespeist und dem oben beschriebenen Verfahren unterzogen. Erste Erfahrungen bei der Durchführung des beschriebenen Verfahrens mit der beschriebenen Vorrichtung haben gezeigt, dass dieser Weg sehr vielversprechend ist.

Auf dem Gebiet der Wasserstofferzeugung sind zudem aus der DE 197 27 589 A1, DE 102 37 744 A1 und EP 1 484 103 A1 Vorrichtungen und Verfahren zur Erzeugung eines wasserstoffreichen Gases bekannt, das zur Versorgung einer Brennstoffzelle dient. Die DE 197 27 589 A1 und DE 102 37 744 A1 sehen hierzu einen Reaktor vor, bei dem in einer ersten Stufe Wasserstoff und Wasser miteinander vermischt werden. In einer zweiten Stufe findet eine autotherme Reaktion statt, bei der die Ausgangsstoffe im Wesentlichen in Kohlenmonoxyd und ein wasserstoffreiches Gas umgewandelt werden. In einer nachgeschalteten Reinigungsstufe kann das Kohlenmonoxyd durch eine Shift-Reaktion mit Wasser in Kohlendioxyd und zusätzlichen Wasserstoff übergeführt werden. Die vor allem in der Startphase aufzubringende thermische Energie kann mittels eines Startbrenners erzeugt werden, der aus dem Kohlenwasserstoffstrom gespeist wird.

Die EP 1 484 103 A1 sieht einen dementsprechenden Reaktor vor, der in einen Teilabgasstrom eines Verbrennungsmotors integriert ist. Dabei kann das erzeugte wasserstoffreiche Gas zur Regeneration nachgeschalteter Katalysatoren oder Filter verwendet werden oder ebenfalls einer Brennstoffzelle zugeführt werden.

Die JP 2000 186532 A offenbart einen internen Verbrennungsmotor mit einem effizienten NOₓ-Katatysator, wobei zur Erreichung dieser Effizienzsteigerung der Verbrennungsmotor über eine an die Ansaugleitung des Motors anschließende Bypass-Leitung verfügt, die zunächst zu einem Brenner und dann über eine weitere Bypass-Leitung zum Eingang des NOₓ-Katalysators unter Umgehung des Motorblocks führt. Durch die vom Brenner erzeugte Verbrennungswärme wird der Bypass-Strom erwärmt, der somit zur Erwärmung und Aktivierung des Katalysators, insbesondere in der kritischen Kaltstartphase, beiträgt. In die Verbrennungsgasströme der Bypass- und der Abgasleitung wird zusätzlich ein Reduktionsmittel zur Regenerierung des NOₓ-Katalysators zugeführt.

Die JP 2005 098247 A betrifft schließlich eine Hilfsvorrichtung für eine Abgasnachbehandlungsvorrichtung, insbesondere für einen NOₓ-Katalysator. Eine solche Hilfsvorrichtung umfasst zwei Injektoren, über welche eine Kraftstoff- und eine Harnstofflösung in einen Luftstrom gegeben werden. Dieses Luft/Kraftstoff/Harnstoff-Gemisch wird in einer Ringdüse fein zerstäubt. Diese Dispersion gelangt in ein zylinderförmiges Rohr, das zu einer Seite hin offen ist. In diesem zylinderförmigen Rohr wird zur zusätzlichen Wärmegewinnung der dispergierte Kraftstoff mittels Zündkerzen unter Bildung von heißen Verbrennungsgasen entzündet.

### Darstellung der Erfindung:

Vor diesem Hintergrund liegt der Erfindung die Aufgabe zugrunde, das aus der EP 1 338 562 A1 bekannte Verfahren und die zur Durchführung des Verfahrens bekannte Vorrichtung weiterzuentwickeln.

Diese Aufgabe wird durch einen Reaktor mit den Merkmalen des Patentanspruchs 1, durch ein Verfahren mit den Merkmalen des Patentanspruchs 16 und durch eine Vorrichtung mit den Merkmalen des Patentanspruchs 31 gelöst.

Vorteilhafte Weiterbildungen ergeben sich aus den Unteransprüchen.

Im Gegensatz zu bekannten Systemen, die eine elektrische Beheizung des Reaktors vorsehen, wird gemäß der Erfindung die zur Durchführung der Thermolyse benötigte Wärmeenergie durch einen Verbrennungsvorgang in einem Brenner bereitgestellt. Die elektrische Energie bekannter Systeme wird im Regelfall von einem vom Verbrennungsmotor angetriebenen Stromgenerator erzeugt, bei Kraftfahrzeugen ist das die Lichtmaschine. Da Verbrennungskraftmaschinen lediglich ein Drittel der dem Kraftstoff innewohnenden Energie in Bewegungsenergie umsetzen, gehen bei dieser Art der Erzeugung von elektrischer Energie zwei Drittel verloren. Im Vergleich dazu wird bei der erfindungsgemäßen Art der Energiebereitstellung der Kraftstoff annähernd zu 100 % in Wärmeenergie umgewandelt, so dass das erfindungsgemäße System zur Erzeugung der gleichen Wärmeenergie weniger Kraftstoff benötigt.

Ein weiterer Vorteil der Erfindung besteht darin, dass in den Abgasen des Verbrennungsvorgangs Wasser enthalten ist. Durch Einleitung der Abgase durch den Hydrolyseraum des thermischen Reaktors kann dieses Wasser zur Aufspaltung der Isocyansäure verwendet werden. Eine eigene Bereitstellung von Wasser beispielsweise durch Abzweigung eines Abgasteilstroms aus der Verbrennungskraftmaschine kann daher entfallen. Die Verwendung eines Abgasteilstromes aus der Verbrennungskraftmaschine hat zudem den Nachteil, dass dieser unter Umständen niederere Temperaturen aufweist als für die Hydrolyse erforderlich, so dass unter Aufwendung zusätzlicher Energie dieser Abgasteilstrom aufgeheizt werden muss, was bei der Erfindung nicht notwendig ist.

Von besonderem Nutzen ist, dass sich der Verbrennungsvorgang im Brenner zur Erzielung einer gewünschten Temperatur steuern lässt. So ist es möglich, den Brenner bei lediglich geringem Kraftstoffmehraufwand heißer zu betreiben als es für die Thermolyse notwendig wäre, um dadurch die Temperatur des aus der Verbrennungskraftmaschine stammenden Abgasstromes anzuheben. Das bringt vor allem in der Kaltstartphase einer Verbrennungskraftmaschine Vorteile, um den SCR-Katalysator möglichst schnell auf Betriebstemperatur zu bringen, ohne dass hierfür motorinterne Massnahmen notwendig sind.

In Verbindung mit einem dem SCR-Katalysator nachgeschalteten Partikelfilter kann die Temperatur im Abgasstrom der Verbrennungskraftmaschine durch den Brenner so gesteuert werden, dass dadurch eine Regeneration des Partikelfilters erfolgt. Eine katalytische Beschichtung des Partekelfilters unterstützt dabei die Filterregeneration und dient gleichzeitig als Ammoniaksperrkatalysator zur Vermeidung von Ammoniakschlupf durch den SCR-Katalysator.

Eine bevorzugte Ausführungsform der Erfindung sieht vor, eine katalytische Verbrennung im Brenner zu erzeugen. Dadurch ist es möglich, den Verbrennungsvorgang bei Temperaturen ablaufen zu lassen, die für die Thermolyse notwendig sind; es wird daher keine überschüssige Wärmeenergie produziert.

Erfindungsgemäß ist der Brenner in den thermischen Reaktor integriert. Daraus ergibt sich eine äusserst kompakte Bauweise, die insbesondere bei Verwendung in Kraftfahrzeugen angesichts des nur begrenzt zur Verfügung stehenden Raumangebots von grosser Bedeutung ist. Die Integration des Brenners in den Reaktor ermöglicht ferner eine Minimierung der Wärmeverluste, da die erzeugte Wärmeenergie direkt in den Thermolyseraum abgegeben werden kann.

Vorzugsweise wird der Brenner aus demselben Kraftstoffsystem gespeist wie die Verbrennungskraftmaschine. Diese Massnahme hat den Vorteil, dass lediglich ein Kraftstoffzufuhrsystem benötigt wird, das nur um einzelne Komponenten ergänzt zu werden braucht.

Vorteilhafterweise kommt der für den Verbrennungsvorgang im Brenner notwendige Sauerstoff aus dem Abgasstrom der Verbrennungskraftmaschine, da dieser bereits den zur Einleitung in den Brenner erforderlichen Druck aufweist. Besonders geeignet ist eine Abzweigung von einem Turbolader oder von der Staudruckzone vor einem Katalysator.

Im Regelfall sieht die Erfindung einen thermischen Reaktor mit Thermolyseraum und Hydrolyseraum vor, um eine vollständige Umwandlung des Harnstoffs auch bei wechselnden Rahmenbedingungen zu erzielen. Im Rahmen der Erfindung liegt aber ebenfalls ein thermischer Reaktor, in dem lediglich eine Thermolyse des Harnstoffs stattfindet und auf die nachgeschaltete Hydrolyse im Reaktor verzichtet wird. Dadurch kann unter bestimmten Rahmenbedingungen, wie sie beispielsweise später noch beschrieben werden, mit einem einfacheren und daher kostengünstigeren erfindungsgemäßen System die vollständige Umwandlung von Harnstoff in Ammoniak erreicht werden.

Obwohl von der Erfindung trockener Harnstoff als Ausgangsstoff bevorzugt wird, ist dennoch die Verwendung einer wässrigen Harnstofflösung möglich. Diese wird in den Thermolyseraum eingespritzt, wo sie verdampft und in Ammoniak und Isocyansäure aufgespalten wird. Das verdampfte Wasser kann dann in einer nachgeschalteten Hydrolyse zur Spaltung der Isocyansäure unter Bildung von zusätzlichem Ammoniak dienen.

### Kurze Beschreibung der Zeichnungen:

Die Erfindung wird nachstehend anhand eines in den Zeichnungen dargestellten Ausführungsbeispiels näher erläutert. Es zeigen
- Fig. 1: eine stark vereinfachte Darstellung der Erfindung im Überblick,
- Fig. 2: einen Längsschnitt durch einen erfindungsgemäßen thermischen Reaktor,
- Fig. 3: einen Längsschnitt durch eine erste Anordnungsvariante eines erfindungsgemäßen thermischen Reaktors im Abgasstrom einer Verbrennungskraftmaschine und
- Fig. 4: einen Längsschnitt durch eine zweite Anordnungsvariante eines erfindungsgemäßen thermischen Reaktors im Abgasstrom einer Verbrennungskraftmaschine.

### Wege zur Ausführung der Erfindung und gewerbliche Verwertbarkeit:

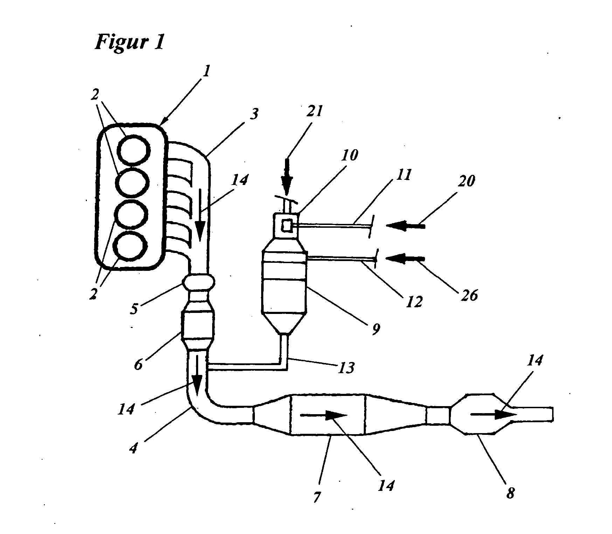

In Fig. 1 sind die wichtigsten Komponenten der Erfindung dargestellt, wobei auf Mess-, Steuer- und Regelorgane sowie auf periphere Komponenten dazu, einschließlich der Steuerung über eine prozessorgesteuerte Anlage verzichtet worden ist. Diese Teile der Erfindung sind in der EP 1 338 562 A1 ausführlich beschrieben, wobei für vorliegende Erfindung Entsprechendes gilt.

Man sieht zunächst eine Verbrennungskraftmaschine 1 in Form eines Dieselmotors eines Kraftfahrzeugs. Ebenso könnte die Verbrennungskraftmaschine 1 von einer Gasturbine oder einem Verbrennungsmotor in einem Blockheizkraftwerk gebildet sein. Die Verbrennungskraftmaschine 1 besitzt vier Zylinder 2, in denen jeweils eine Verbrennung eines kohlenwasserstoffhaltigen Kraftstoffes stattfindet. Die Reaktionsprodukte aus dieser Verbrennung werden im weiteren als Abgasstrom 14 bezeichnet, der im Krümmer 3 gesammelt und in eine einzige Abgasleitung 4 eingeleitet wird.

Am Ende des Krümmers 3 ist ein Turbolader 5 in den Abgasstrom 14 zwischengeschaltet zur Erhöhung des Ladedrucks für den Verbrennungsprozess. Stromabwärts des Turboladers 5 sieht man einen Oxydationskatalysator 6, dem ein SCR-Katalysator 7 und schließlich ein Partikelfilter 8 nachgeschaltet ist.

Der aus der Verbrennungskraftmaschine 1 entweichende Abgasstrom 14 erfährt zunächst im Oxydationskatalysator 6 eine Reduzierung der Kohlenwasserstoffanteile mit Hilfe des im Abgasstrom 14 enthaltenen Sauerstoffs.

Im SCR-Katalysator 7 findet dann eine Reduktion der Stickoxyde mit Hilfe von Ammoniak als Reduktionsmittel statt. Im Partikelfilter 8 werden dem Abgasstrom 14 schließlich Rußpartikel in Feinststaubgröße entzogen.

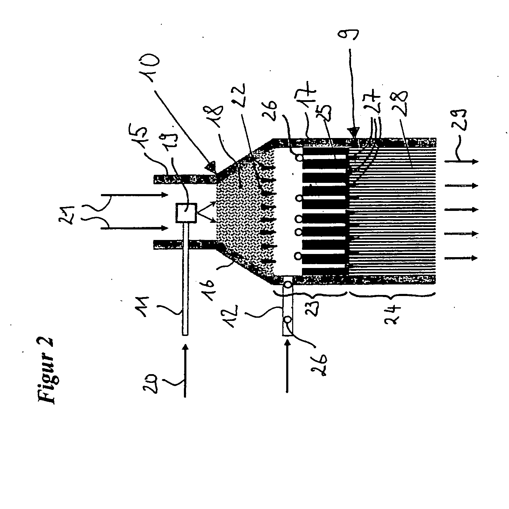

Der für den SCR-Katalysator 7 notwendige Ammoniak wird im Reaktionsraum eines thermischen Reaktors 9 erzeugt, dem ein Brenner 10 vorgeschaltet ist. Aufbau und Funktionsweise des thermischen Reaktors 9 und Brenners 10 werden unter Fig. 2 näher beschrieben.

Der Brenner 9 wird über eine Leitung 11 mit Kraftstoff 20 versorgt, der vorzugsweise vom Tank der Verbrennungskraftmaschine 1 stammt. Weiter sieht man eine Harnstoffleitung 12, die in den Reaktionsraum des thermischen Reaktors 9 mündet. Durch die Harnstoffleitung 12 kann der thermische Reaktor 9 mit trockenem Harnstoff beschickt werden. Dies geschieht vorzugsweise über einen Trägerluftstrom, mittels dessen der pulverförmige oder pelletförmige Harnstoff 26 eingeblasen wird. Eine derartige Fördervorrichtung einschließlich der Bevorratung wurde vom Erfinder bereits entwickelt und ist in der DE 102 51 498 A1 beschrieben, deren Offenbarungsgehalt durch Bezugnahme als mit offenbart anzusehen ist. Alternativ besteht die Möglichkeit, über die Harnstoffleitung 12 eine wässrige Harnstofflösung oder eine andere Ammoniak abspaltende Substanz in den thermischen Reaktor 9 einzuspritzen. Dazu geeignete Einspritzanlagen sind bekannt.

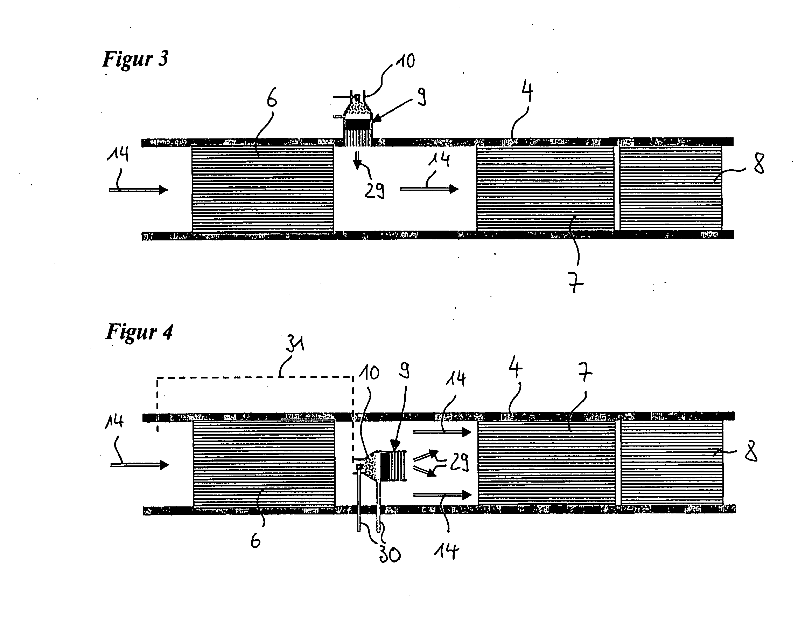

Der vom Brenner 10 benötigte Sauerstoff 21 kann direkt aus der Umgebungsluft stammen, wofür diese mit Hilfe eines Kompressors unter Druck in den Brenner 10 eingespeist wird. Eine Alternative hierzu besteht durch Umlenkung eines Abgasteilstroms aus der Abgasleitung 4 in den Brenner 10, so dass der im Abgas enthaltene Sauerstoff vom Brenner 10 verbrannt wird. Die Entnahme des Abgasteilstromes geschieht vorzugsweise im Bereich des Turboladers 5 oder der Staudruckzone vor dem Oxydationskatalysator 6 (Figur 4), das bereits den notwendigen Einspeisedruck aufweist.

Der im thermischen Reaktor erzeugte Ammoniak wird mit dem übrigen Abgas des Brenners 10 über die Speiseleitung 13 stromaufwärts des SCR-Katalysators 7 in den Abgasstrom 14 eingeleitet.

In Fig. 2 ist der nähere Aufbau des thermischen Reaktors 9 gezeigt, wobei im vorliegenden Beispiel der Brenner 10 in den thermischen Reaktor 9 integriert ist. Ebenso wäre es möglich, dass der Brenner 10 eine vom Reaktor 9 getrennte Komponente darstellt und die im Brenner 10 erzeugte Wärmeenergie in den Reaktor 9 übergeleitet wird.

Der thermische Reaktor 9 besitzt ein Gehäuse mit einem oberen zylindrischen Abschnitt 15, einen sich nach unten anschließenden konisch aufgeweiteten Abschnitt 16 und einen an die Aufweitung anschließenden unteren zylindrischen Abschnitt 17.

Der katalytische Brenner 10 wird von den Abschnitten 15 und 16 gebildet, wobei der konische Gehäuseabschnitt 16 den Verbrennungsraum umschließt, der mit einem katalytischen Material 18 gefüllt ist. In dem darüber liegenden Gehäuseabschnitt 15 ist zentral die Einspritzdüse 19 einer nicht weiter dargestellten Einspritzvorrichtung angeordnet, an die die Kraftstoffleitung 11 anschließt. Von der Einspritzdüse 19 wird der Kraftstoff 20 fein auf die Querschnittsfläche des katalytischen Materials 18 verteilt, um eine gleichmäßige und vollständige Verbrennung in der Brennkammer zu erreichen. Die Kraftstoffmengenregulierung zur Steuerung der Brennertemperatur kann dabei durch geeignete Mengenansteuerung der Einspritzdüse 19 bei kontinuierlicher Einspritzung erfolgen oder durch Veränderung der Taktzeiten bei diskontinuierlicher Einspritzung.

Der für den Verbrennungsprozess notwendige Sauerstoff 21 wird von der Umgebungsluft oder dem Abgasstrom 14 zur Verfügung gestellt, wozu unter Druck Luft oder ein Abgasteilstrom stirnseitig in den oberen Abschnitt 15 des Gehäuses 14 eingeleitet wird. Auf diese Weise findet unter Anwesenheit von Sauerstoff 21 und Kraftstoff 20 eine katalytische Verbrennung in der Brennkammer statt. Die dabei erzeugte Wärmeenergie wird hauptsächlich über den Abgasstrom des Brenners 10 und Wärmeleitung in den Reaktionsraum des thermischen Reaktors 9 eingeleitet, was durch die Pfeile 22 versinnbildlicht sein soll.

Eine alternative - nicht dargestellte - Art der Kraftstoffeinbringung in den Verbrennungsraum und dortige Verteilung sieht die Anordnung einer porösen Struktur im Verbrennungsraum vor, die vorzugsweise katalytisch beschichtet ist. Indem Kraftstoff kontinuierlich in die poröse Struktur geleitet wird, findet eine Verteilung und Verdampfung des Kraftstoffs durch Benetzung statt und es erfolgt eine Durchmischung mit Sauerstoff aus der Umgebungsluft oder dem Abgasstrom. Die Verbrennungsreaktion läuft dann in der porösen Struktur ab. Diese Alternative zeichnet sich durch eine besonders kompakte Bauweise aus.

Der vom Abschnitt 17 umschlossene Reaktionsraum des Reaktors 9 ist in Längsrichtung unterteilt in einen dem Brenner 10 unmittelbar benachbarten Thermolyseraum 23 und einen sich an den Thermolyseraum 23 nach unten anschließenden Hydrolyseraum 24. Verbrennungsraum, Thermolyseraum 23 und Hydrolyseraum 24 sind dabei offene, ineinander übergehende Bereiche mit unterschiedlichen Funktionen, die kontinuierlich durchströmt werden.

Im unteren, dem Hydrolyseraum 24 zugewandten Teilbereich des Thermolyseraumes 23 ist ein thermisches Massenelement 25 angeordnet, das zur Aufnahme und Speicherung der vom Brenner 10 erzeugten Wärmeenergie dient. Das thermische Massenelement 25 kann spiral- oder rostförmige Gestalt besitzen und aus einem hitzebeständigen Material, wie zum Beispiel Metall oder Keramik bestehen. In Längsrichtung ist das thermische Massenelement 25 gasdurchlässig.

Oberhalb des thermischen Massenelements 25 ergibt sich dadurch ein scheibenförmiger Hohlraum, in den die Harnstoffleitung 12 mündet, über die trockene Harnstoffpellets 26 mittels eines Trägerluftstroms eingeblasen werden. Die Pellets 26 kommen dabei auf dem thermischen Massenelement 25 zu liegen, wo unverzüglich eine spontane Thermolyse stattfindet. Dabei werden die Harnstoffpellets 26 in gasförmigen Ammoniak und Isocyansäure gespalten, die zusammen mit den Abgasen aus dem Brenner 10 durch das thermische Massenelement 25 hindurch in den Hydrolyseraum 24 strömen, was durch die Pfeile 27 versinnbildlicht sein soll.

Der Hydrolyseraum 24 ist wiederum mit einem katalytischen Material 28 angefüllt. Beim Durchströmen der Reaktionsprodukte aus dem Thermolyseraum 23 durch den Hydrolyseraum 24 wird die Isocyansäure mittels des im Abgasstrom des Brenners 10 enthaltenen Wassers zu Ammoniak und Kohlendioxyd hydrolisiert.

Der thermische Reaktor 9 wandelt somit den Harnstoff vollständig in Ammoniak und Kohlendioxyd um, das zusammen mit den Abgasen aus dem Brenner 10 über die Speiseleitung 13 dem Abgasstrom 14 stromaufwärts des SCR-Reaktors 7 aufgegeben wird. In Figur 2 sind diese Produkte durch die Pfeile 29 symbolhaft dargestellt.

Der vorbeschriebene thermische Reaktor 9 stellt eine besonders bevorzugte Ausführungsform der Erfindung dar, ohne diese darauf zu beschränken. Ebenso ist es möglich, den Brenner 10 und thermischen Reaktor 9 räumlich getrennt voneinander anzuordnen, wobei in einem solchen Falle die für die Thermolyse erforderliche Wärmeenergie über Leitungen in den Thermolyseraum 23 des Reaktionsraumes eingespeist wird.

Auch die katalytische Verbrennung stellt eine bevorzugte Ausführungsform dar, weil damit der Verbrennungsvorgang bei niedrigeren Temperaturen abläuft, die für die Thermolyse ausreichend sind. Ebenso ist es möglich, den Brenner 10 ohne Katalysator 18 zu betreiben mit entsprechend höheren Temperaturen.

Eine weitere Ausführungsform der Erfindung sieht vor, die Temperatur im Brenner 10 durch eine geeignete Mess- und Regeleinrichtung gezielt zu steuern, um beispielsweise in der Kaltstartphase der Verbrennungskraftmaschine 1 den Abgasstrom aufzuheizen, um den SCR-Katalysator 7 möglichst schnell auf Betriebstemperatur zu bringen oder die Regeneration eines nachgeordneten Partikelfilters 8 zu ermöglichen. Dies geschieht durch Steuerung der stöchiometrischen Verhältnisse bei der Verbrennung. Vorzugsweise wird dabei die Kraftstoffmenge variiert bei konstanter Luft- bzw. Sauerstoffzufuhr.

Von der Erfindung sind auch Ausführungsformen der Erfindung umfasst, bei denen der thermische Reaktor 9 nur einen Thermolyseraum 23 besitzt, auf die Hydrolyse also verzichtet wird. Ein solcher Reaktor 9 produziert Ammoniak und Isocyansäure, wobei letztere bei niederen Temperaturen zur Bildung von Ablagerungen neigt. Eine solche Ausführungsform des thermischen Reaktors ist daher vor allem in Verbindung mit Konzepten sinnvoll, die den Anfall von Isocyansäure berücksichtigen. Eine Lösung hierfür wird nachfolgend unter den Fig. 3 und 4 als Alternative beschrieben, bei der im SCR-Katalysator 7 die Hydrolyse stattfindet.

Zunächst sollen jedoch die Fig. 3 und 4 in Verbindung mit dem unter Fig. 2 beschriebenen thermischen Reaktor 9 mit integriertem Brenner 10 erläutert werden. Die Fig. 3 und 4 zeigen mögliche Varianten der Anordnung eines thermischen Reaktors 9 mit integriertem Brenner 10 innerhalb eines Abgassystems. Während in Fig. 1 eine Lösung beschrieben ist, bei der der zur Durchführung des SCR-Verfahrens notwendige Ammoniak über die Speiseleitung 13 in den Abgasstrom 14 eingeleitet wird, ist in Fig. 3 eine unmittelbare Anordnung des thermischen Reaktors 9 mit integriertem Brenner 10 an der Abgasleitung 4 dargestellt. Damit mündet der Hydrolyseraum 24 des thermischen Reaktors 9 direkt in die Abgasleitung 4, so dass Ammoniak mit den übrigen Reaktionsprodukten und dem Abgas aus dem Brenner 10 unmittelbar in den Abgasstrom 14 gelangt. Dadurch ergeben sich sehr kurze Reaktionszeiten des Gesamtsystems bei Lastwechselsituationen.

Fig. 4 sieht die Anordnung des thermischen Reaktors 9 mit integriertem Brenner 10 innerhalb der Abgasleitung 4 vor. Dabei wird der thermische Reaktor 9 mit integriertem Brenner 10 koaxial von radialen Halteelementen 30 im Abgasstrom 14 gehalten. Um den Strömungswiderstand für den Abgasstrom 14 nicht zu erhöhen, kann die Abgasleitung 4 in diesem Bereich radial erweitert sein, so dass ein ausreichend großer Strömungsquerschnitt zur Verfügung gestellt wird. Um die Strömungswiderstände weiter zu minimieren können die Halteelemente 30 gleichzeitig als Zufuhrleitungen für den Kraftstoff 20 und Harnstoff 26 dienen.

Der Abgasstrom 14 durchströmt den thermischen Reaktor 9 und Brenner 10 infolge der offenen Stirnseiten, so dass für den Verbrennungsprozess im Brenner 10 der Sauerstoff 21 aus dem Abgasstrom 14 zur Verfügung steht und das im Abgasstrom 14 enthaltene Wasser zur Hydrolyse der Isocyansäure dient. Zur Druckerhöhung des den Reaktor 9 durchströmenden Abgasteilstroms können Leitflächen am freien Rand des Gehäuseabschnitts 15 angebracht sein oder es kann der Abgasteilstrom über eine Bypassleitung 31 aus der Staudruckzone vor dem Oxydationskatalysator 6 zugeführt werden.

Eine solche erfindungsgemäße Anordnung zeichnet sich ebenfalls durch eine kurze Reaktionszeit bei Lastwechsel aus, wobei durch die zentrische Einleitung des Ammoniaks in den Abgasstrom 14 eine homogene Verteilung des Ammoniaks im Abgasstrom 14 schneller erreicht wird. Dadurch ist es möglich, den Abstand zwischen dem thermischen Reaktor 9 und dem SCR-Katalysator 7 kürzer auszubilden, was insgesamt zu einer kompakteren Bauweise führt.

Eine weitere Alternative stellt die Verwendung des unter Fig. 2 beschriebenen thermischen Reaktors 9 ohne Hydrolyseraum 24 in einer Anordnung gemäß der Fig. 3 oder 4 dar. Diese Alternative ist immer dann von Interesse, wenn der Abgasstrom 14 eine gleichbleibend hohe Mindesttemperatur aufweist, wie es beispielsweise bei Blockheizkraftwerken der Fall ist. In diesem Fall gelangt gleichzeitig mit dem Ammoniak auch die bei der Thermolyse entstehende Isocyansäure in den Abgasstrom 14. Beim Eintritt der Isocyansäure in den SCR-Katalysator 7 findet eine Hydrolyse mittels des im Abgasstrom 14 vorhandenen Wassers statt, so dass im SCR-Katalysator 7 direkt zusätzliches Ammoniak entsteht.

Der dem SCR-Katalysator 7 nachgeschaltete katalytisch beschichtete Partikelfilter 8 kann neben der Filterfunktion für Rußpartikel auch als AmmoniakSperrkatalysator wirken, der den Ammoniakschlupf durch den SCR-Katalysator oxidiert.

## Patentansprüche

1. Reaktor zur Erzeugung von Ammoniak für die Reduktion von Stickoxyden im Abgasstrom (14) von Verbrennungskraftmaschinen (1) aus einer Ammoniak abspaltenden Substanz, insbesondere aus Harnstoff (26) oder aus einer wässrigen Harnstofflösung, mit einem Reaktionsraum, der mindestens einen Thermolyseraum (23) aufweist, in welchen die Ammoniak abspaltende Substanz einleitbar ist, **dadurch gekennzeichnet, dass** in den Reaktor (9) ein Brenner (10) integriert ist, der dem Thermolyseraum (23) unmittelbar vorgeschaltet ist, wobei Brenner (10) und Thermolyseraum (23) ineinander übergehen und dessen beim Verbrennungsvorgang erzeugte Wärmeenergie in den Thermolyseraum (23) des Reaktors (9) zur thermolytischen Abspaltung von Ammoniak einspeisbar ist.

2. Reaktor nach Anspruch 1, **dadurch gekennzeichnet, dass** der Brenner (10) ein katalytischer Brenner ist.

3. Reaktor nach Anspruch 1 oder 2, **dadurch gekennzeichnet, dass** der Brenner (10) eine Einspritzvorrichtung zur Einbringung von Kraftstoff (20) besitzt.

4. Reaktor nach einem der Ansprüche 1 bis 3, **dadurch gekennzeichnet, dass** der Brenner (10) zur Mengenregulierung des Kraftstoffs (20) eine ansteuerbare Einspritzdüse (19) besitzt.

5. Reaktor nach einem der Ansprüche 1 bis 3, **dadurch gekennzeichnet, dass** der Brenner (10) zur Mengenregulierung des Kraftstoffs (20) eine Einspritzdüse (19) besitzt, die diskontinuierlich mit Kraftstoff (20) beschickt wird.

6. Reaktor nach einem der Ansprüche 1 bis 5, **dadurch gekennzeichnet, dass** der Brenner (10) eine poröse Struktur zur Verteilung und Verdampfung des Kraftstoffs (20) durch Benetzung beinhaltet.

7. Brenner nach Anspruch 6, **dadurch gekennzeichnet, dass** die poröse Struktur katalytisch beschichtet ist.

8. Reaktor nach einem der Ansprüche 1 bis 7, **dadurch gekennzeichnet, dass** zur Versorgung des Brenners (10) mit Sauerstoff der Brenner (10) einen Kompressor aufweist, der an die Umgebungsluft oder den Abgasstrom (14) der Verbrennungskraftmaschine (1) angeschlossen ist.

9. Reaktor nach einem der Ansprüche 1 bis 8, **dadurch gekennzeichnet, dass** im Thermolyseraum (23) ein thermisches Massenelement (25) zur Aufnahme, Speicherung und Abgabe der Wärmeenergie an die Substanz angeordnet ist.

10. Reaktor nach Anspruch 9, **dadurch gekennzeichnet, dass** das thermische Massenelement (25) eine gitter- oder spiralförmige Struktur besitzt, die in Längsrichtung des Reaktors (9) durchströmbar ist.

11. Reaktor nach Anspruch 9 oder 10, **dadurch gekennzeichnet, dass** das thermische Massenelement (25) aus Metall oder Keramik besteht.

12. Reaktor nach einem der Ansprüche 1 bis 11, **dadurch gekennzeichnet, dass** im Thermolyseraum (23) ein Katalysator angeordnet ist, vorzugsweise das thermische Massenelement (25) katalytisch beschichtet ist.

13. Reaktor nach einem der Ansprüche 1 bis 12, **dadurch gekennzeichnet, dass** der Reaktor (9) eine dem Thermolyseraum (23) nachgeschalteten Hydrolyseraum (24) besitzt, in der Isocyansäure zu Ammoniak hydrolysiert wird.

14. Reaktor nach Anspruch 13, **dadurch gekennzeichnet, dass** Thermolyseraum (23) und Hydrolyseraum (24) offen ineinander übergehen.

15. Reaktor nach Anspruch 13 oder 14, **dadurch gekennzeichnet, dass** der Abgasstrom des Brenners (10) unmittelbar in den Hydrolyseraum (24) mündet.

16. Verfahren zur Reduktion von Stickoxyden im Abgasstrom (14) von Verbrennungskraftmaschinen (1), insbesondere von Dieselmotoren, bei dem Ammoniak in den Abgasstrom (14) eingeleitet wird und als selektives Reduktionsmittel die Stickoxyde unter Bildung von Stickstoff und Wasser katalytisch spaltet, wobei der Ammoniak durch Thermolyse einer Ammoniak abspaltenden Substanz innerhalb eines Reaktors (9), insbesondere von trockenem Harnstoff oder einer wässrigen Harnstofflösung erzeugt wird, **dadurch gekennzeichnet, dass** die für die thermolytische Abspaltung von Ammoniak benötigte Wärmeenergie durch einen Verbrennungsvorgang in einem in den Reaktor (9) integrierten Brenner (10) erzeugt und unmittelbar anschließend einem dem Brenner (10) nachgeschalteten Thermolyseraum (23) zugeführt wird.

17. Verfahren nach Anspruch 16, **dadurch gekennzeichnet, dass** der Verbrennungsvorgang katalytisch erfolgt.

18. Verfahren nach Anspruch 18 oder 18, **dadurch gekennzeichnet, dass** die Wärmeenergie zum größten Teil durch Wärmeleitung und/oder Konvektion, insbesondere durch die Abgase aus dem Verbrennungsprozess zum Ort der Thermolyse transportiert wird.

19. Verfahren nach einem der Ansprüche 16 bis 18, **dadurch gekennzeichnet, dass** die Wärmeenergie am Ort der Thermolyse zum Teil gespeichert wird.

20. Verfahren nach einem der Ansprüche 16 bis 19, **dadurch gekennzeichnet, dass** durch Steuerung der Temperatur des Verbrennungsvorgang die Temperatur des Abgasstromes (14) manipuliert wird.

21. Verfahren nach Anspruch 20, **dadurch gekennzeichnet, dass** zur Steuerung der Temperatur des Verbrennungsprozesses kontinuierlich eine variable Kraftstoffmenge (20) zugeführt wird.

22. Verfahren nach Anspruch 20, **dadurch gekennzeichnet, dass** zur Steuerung der Temperatur des Verbrennungsprozesses diskontinuierlich eine konstante Menge Kraftstoff (20) zugeführt wird.

23. Verfahren nach einem der Ansprüche 16 bis 22, **dadurch gekennzeichnet, dass** durch Benetzung einer porösen Struktur eine Verteilung des Kraftstoffes für den Verbrennungsvorgang erfolgt.

24. Verfahren nach einem der Ansprüche 16 bis 23, **dadurch gekennzeichnet, dass** für den Verbrennungsvorgang Sauerstoff unter Druck aus dem Abgasstrom (14) oder der Umgebungsluft zugeführt wird.

25. Verfahren nach einem der Ansprüche 16 bis 24, **dadurch gekennzeichnet, dass** die Thermolyse katalytisch unterstützt wird.

26. Verfahren nach einem der Ansprüche 16 bis 25, **dadurch gekennzeichnet, dass** der Thermolyse eine Hydrolyse zur Aufbereitung der Reaktionsprodukte aus der Thermolyse nachgeschaltet ist.

27. Verfahren nach Anspruch 26, **dadurch gekennzeichnet, dass** die Abgase aus dem Verbrennungsvorgang der Hydrolyse zugeführt werden.

28. Verfahren nach einem der Ansprüche 16 bis 27, **dadurch gekennzeichnet, dass** die Thermolyse, vorzugsweise mit nachfolgender Hydrolyse, in unmittelbarer Angrenzung zum Abgasstrom (14) der Verbrennungskraftmaschine (1) erfolgt.

29. Verfahren nach einem der Ansprüche 16 bis 27, **dadurch gekennzeichnet, dass** der Verbrennungsprozess und die Thermolyse, vorzugsweise mit nachfolgender Hydrolyse, im Abgasstrom (14) der Verbrennungskraftmaschine (1) erfolgt.

30. Verfahren nach einem der Ansprüche 16 bis 29, **dadurch gekennzeichnet, dass** der Ammoniakschlupf nach Reduktion der Stickoxyde oxidiert wird.

31. Vorrichtung zur Durchführung eines Verfahren nach einem der Ansprüche 16 bis 30 mit
- einem SCR-Katalysator (7), der in den Abgasstrom (14) eingeschaltet ist und in dem die Stickoxyde mittels Ammoniak unter Bildung von Stickstoff und Wasser katalytisch reduziert werden,
- einer Einheit zur Erzeugung von Ammoniak aus einer Ammoniak abspaltenden Substanz, insbesondere aus Harnstoff (26) oder aus einer wässrigen Harnstofflösung, umfassend einen Vorratsbehälter für die Ammoniak abspaltende Substanz, einen Reaktor (9) nach einem der Ansprüche 1 bis 15 und eine Fördereinrichtung zur Beschickung des Reaktors (9) mit der Substanz aus dem Vorratsbehälter,
- einer Einspeisung des im Reaktors (9) erzeugtes Ammoniaks stromaufwärts des SCR-Katalysators (7) in den Abgasstrom (14).

32. Vorrichtung nach Anspruch 31, **dadurch gekennzeichnet, dass** die Kraftstoffzufuhr (11) für den Brenner (10) an den Kraftstofftank der Verbrennungskraftmaschine (1) angeschlossen ist.

33. Vorrichtung nach Anspruch 31 oder 32, **dadurch gekennzeichnet, dass** zur Versorgung des Brenners (10) mit Sauerstoff (21) der Brenner (10) an einen Turbolader (5) oder eine Staudruckzone vor einem Katalysator (6) im Abgasstrom (14) der Verbrennungskraftmaschine (1) angeschlossen ist.

34. Vorrichtung nach einem der Ansprüche 31 bis 33, **dadurch gekennzeichnet, dass** der Reaktor (9) stromaufwärts des SCR-Katalysators (7) unmittelbar an der Abgasleitung (4) der Verbrennungskraftmaschine (1) angeordnet ist und der Thermolyseraum (23) oder der Hydrolyseraum (24) unmittelbar in den Abgasstrom (14) der Verbrennungskraftmaschine (1) mündet.

35. Vorrichtung nach einem der Ansprüche 31 bis 33, **dadurch gekennzeichnet, dass** der Reaktor (9) und Brenner (10) stromaufwärts des SCR-Katalysators (7) innerhalb der Abgasleitung (4) der Verbrennungskraftmaschine (1) im Abgasstrom (14) angeordnet sind.

36. Vorrichtung nach einem der Ansprüche 31 bis 35, **dadurch gekennzeichnet, dass** stromabwärts des SCR-Katalysators (7) ein Partikelfilter (8) angeordnet ist.

37. Vorrichtung nach Anspruch 36, **dadurch gekennzeichnet, dass** der Partikelfilter(8) zur Unterstützung seiner Regeneration katalytisch beschichtet ist.

38. Vorrichtung nach Anspruch 36 oder 37, **dadurch gekennzeichnet, dass** der Partikelfilter (8) zur Oxidation des Ammoniakschlupfes durch den SCR-Katalysator (7) katalytisch beschichtet ist.

## Claims

1. A reactor for producing ammonia for the reduction of nitrogen oxides in the exhaust gas flow (14) from internal-combustion engines (1) from a substance splitting off ammonia, in particular from urea (26) or from an aqueous urea solution, with a reaction chamber which has at least one thermolysis chamber (23) into which the substance splitting off ammonia can be introduced, **characterised in that** a burner (10) is integrated into the reactor (9) and is connected immediately upstream of the thermolysis chamber (23), wherein the burner (10) and the thermolysis chamber (23) merge into one another and its thermal energy generated during the combustion process can be fed into the thermolysis chamber (23) of the reactor (9) for the thermolytic splitting-off of ammonia.

2. A reactor according to Claim 1, **characterised in that** the burner (10) is a catalytic burner.

3. A reactor according to Claim 1 or 2, **characterised in that** the burner (10) has an injection device for the admission of fuel (20).

4. A reactor according to any one of Claims 1 to 3, **characterised in that** the burner (10) has a controllable injection nozzle (19) for regulating the flow of fuel (20).

5. A reactor according to any one of Claims 1 to 3, **characterised in that** the burner (10) has an injection nozzle (19) for regulating the flow of fuel (20), which is fed discontinuously with fuel (20).

6. A reactor according to any one of Claims 1 to 5, **characterised in that** the burner (10) contains a porous structure for distributing and evaporating the fuel (20) by wetting.

7. A recator according to Claim 6, **characterised in that** the porous structure is catalytically coated.

8. A reactor according to any one of Claims 1 to 7, **characterised in that** for supplying the burner (10) with oxygen the burner (10) has a compressor which is connected to the ambient air or to the exhaust gas flow (14) of the internal-combustion engine (1).

9. A reactor according to any one of Claims 1 to 8, **characterised in that** a thermal mass element (25) is disposed in the thermolysis chamber (23) for absorbing, storing and releasing the thermal energy to the substance.

10. A reactor according to Claim 9, **characterised in that** the thermal mass element (25) has a lattice-like or spiral-shaped structure, through which the flow can take place in the longitudinal direction of the reactor (9).

11. A reactor according to Claim 9 or 10, **characterised in that** the thermal mass element (25) consists of metal or ceramic.

12. A reactor according to any one of Claims 1 to 11, **characterised in that** a catalyst is arranged in the thermolysis chamber (23), preferably the thermal mass element (25) is catalytically coated.

13. A reactor according to any one of Claims 1 to 12, **characterised in that** the reactor (9) has a hydrolysis chamber (24) which is connected downstream of the thermolysis chamber (23) and in which isocyanic acid is hydrolysed to ammonia.

14. A reactor according to Claim 13, **characterised in that** the thermolysis chamber (23) and hydrolysis chamber (24) merge openly into one another.

15. A reactor according to Claim 13 or 14, **characterised in that** the the exhaust gas flow of the burner (10) discharges directly into the hydrolysis chamber (24).

16. A method for the reduction of nitrogen oxides in the exhaust gas flow (14) from internal-combustion engines (1), in particular from diesel engines, in which ammonia is introduced into the exhaust gas flow (14) and as a selective reducing agent catalytically cracks the nitrogen oxides to form nitrogen and water, wherein the ammonia is produced by thermolysis of a substance splitting off ammonia inside the reactor (9), in particular from dry urea or an aqueous urea solution, **characterised in that** the thermal energy required for the thermolytic splitting-off of ammonia is generated by a combustion process in a burner (10) integrated into the reactor (9) and, immediately thereafter, is fed to a thermolysis chamber (23) connected downstream of the burner (10).

17. A method according to Claim 16, **characterised in that** the combustion process takes place catalytically.

18. A method according to Claim 16 or 18, **characterised in that** the thermal energy is transferred for the most part by thermal conduction and/or convection, in particular by the exhaust gases from the combustion process to the location of the thermolysis.

19. A method according to any one of Claims 16 to 18, **characterised in that** the thermal energy is stored partly at the location of the thermolysis.

20. A method according to any one of Claims 16 to 19, **characterised in that** the temperature of the exhaust gas flow (14) is manipulated by controlling the temperature of the combustion process.

21. A method according to Claim 20, **characterised in that** a variable fuel flow (20) is supplied continuously to control the temperature of the combustion process.

22. A method according to Claim 20, **characterised in that** a constant flow of fuel (20) is admitted discontinuously to control the temperature of the combustion process.

23. A method according to any one of Claims 16 to 22, **characterised in that**, by wetting a porous structure, distribution of the fuel for the combustion process takes place.

24. A method according to any one of Claims 16 to 23, **characterised in that**, for the combustion process, oxygen under pressure is supplied from the exhaust gas flow (14) or the ambient air.

25. A method according to any one of Claims 16 to 24, **characterised in that** the thermolysis is catalytically assisted.

26. A method according to any one of Claims 16 to 25, **characterised in that** a hydrolysis for the processing of the reaction products from the thermolysis is connected downstream of the thermolysis.

27. A method according to Claim 26, **characterised in that** the exhaust gases from the combustion process are fed to the hydrolysis.

28. A method according to any one of Claims 16 to 27, **characterised in that** the thermolysis, preferably with subsequent hydrolysis, takes place immediately adjacent the exhaust gas flow (14) of the internal-combustion engine (1).

29. A method according to any one of Claims 16 to 27, **characterised in that** the combustion process and the thermolysis, preferably with subsequent hydrolysis, takes place in the exhaust gas flow (14) of the internal-combustion engine (1).

30. A method according to any one of Claims 16 to 29, **characterised in that** ammonia residue is oxidised after reduction of the nitrogen oxides.

31. An apparatus for carrying out a method according to any one of Claims 16 to 30, with
- an SCR catalyst (7) which is connected into the exhaust gas flow (14) and in which the nitrogen oxides are catalytically reduced by means of ammonia to form nitrogen and water,
- a unit for producing ammonia from a substance splitting off ammonia, in particular from urea (26) or from an aqueous urea solution, comprising a reservoir for the substance splitting off the ammonia, a reactor (9) according to any one of Claims 1 to 15 and a feed device for charging the reactor (9) with the substance from the reservoir,
- feeding the ammonia produced in the reactor (9) into the exhaust gas flow (14) upstream of the SCR catalyst (7).

32. An apparatus according to Claim 31, **characterised in that** the fuel supply (11) for the burner (10) is connected to the fuel tank of the internal-combustion engine (1).

33. An apparatus according to Claim 31 or 32, **characterised in that** for supplying the burner (10) with oxygen (21) the burner (10) is connected to a turbocharger (5) or a backpressure zone upstream of a catalyst (6) in the exhaust gas flow (14) of the internal-combustion engine (1).

34. An apparatus according to any one of Claims 31 to 33, **characterised in that** the reactor (9) is arranged upstream of the SCR catalyst (7) directly into the exhaust pipe (4) of the internal-combustion engine (1) and the thermolysis chamber (23) or the hydrolysis chamber (24) discharges directly into the exhaust gas flow (14) of the internal-combustion engine (1).

35. An apparatus according to any one of Claims 31 to 33, **characterised in that** the reactor (9) and the burner (10) are arranged in the exhaust gas flow (14) upstream of the SCR catalyst (7) within the exhaust pipe (4) of the internal-combustion engine (1).

36. An apparatus according to any one of Claims 31 to 35, **characterised in that** a particulate filter (8) is disposed downstream of the SCR catalyst (7).

37. An apparatus according to Claim 36, **characterised in that** the particulate filter (8) is catalytically coated to assist its regeneration.

38. An apparatus according to Claim 36 or 37, **characterised in that** the particulate filter (8) is catalytically.coated for oxidation of the ammonia residue by the SCR catalyst (7).

## Revendications

1. Réacteur de production d'ammoniac pour la réduction d'oxydes d'azote dans le flux de gaz d'échappement (14) de machines à combustion interne (1) à partir d'une substance émettant de l'ammoniac par scission, en particulier à partir d'urée (26) ou à partir d'une solution aqueuse d'urée, avec une chambre de réaction qui présente au moins une chambre de thermolyse (23) dans laquelle la substance émettant de l'ammoniac par scission peut être introduite, **caractérisé en ce que** dans le réacteur (9) est intégré un brûleur (10) qui est placé immédiatement en amont de la chambre de thermolyse (23), brûleur (10) et chambre de thermolyse (23) se raccordant l'un à l'autre et dont l'énergie calorifique qu'il génère lors du processus de combustion peut être injectée dans la chambre de thermolyse (23) du réacteur (9) pour la scission thermolytique de l'ammoniac.

2. Réacteur selon la revendication 1, **caractérisé en ce que** le brûleur (10) est un brûleur catalytique.

3. Réacteur selon la revendication 1 ou 2, **caractérisé en ce que** le brûleur (10) possède un dispositif d'injection pour l'introduction de carburant (20).

4. Réacteur selon une des revendications 1 à 3, **caractérisé en ce que** le brûleur (10) possède un injecteur commandable (19) pour la régulation de débit du carburant (20).

5. Réacteur selon une des revendications 1 à 3, **caractérisé en ce que** le brûleur (10) possède un injecteur (19) alimenté en carburant (20) de manière discontinue pour la régulation de débit du carburant (20).

6. Réacteur selon une des revendications 1 à 5, **caractérisé en ce que** le brûleur (10) contient une structure poreuse pour répartir et vaporiser le carburant (20) par mouillage.

7. Réacteur selon la revendication 6, **caractérisé en ce que** la structure poreuse est revêtue catalytiquement.

8. Réacteur selon une des revendications 1 à 7, **caractérisé en ce que** pour l'alimentation du brûleur (10) en oxygène, le brûleur (10) présente un compresseur qui est relié à l'air ambiant ou au flux de gaz d'échappement (14) de la machine à combustion interne (1).

9. Réacteur selon une des revendications 1 à 8, **caractérisé en ce que** dans la chambre de thermolyse (23) est disposé un élément massique thermique (25) destiné à recevoir, stocker et restituer l'énergie calorifique à la substance.

10. Réacteur selon la revendication 9, **caractérisé en ce que** l'élément massique thermique (25) possède une structure en forme de grille ou de spirale qui peut être traversée par un flux en direction longitudinale du réacteur (9).

11. Réacteur selon la revendication 9 ou 10, **caractérisé en ce que** l'élément massique thermique (25) est en métal ou en céramique.

12. Réacteur selon une des revendications 1 à 11, **caractérisé en ce que** dans la chambre de thermolyse (23) est disposé un catalyseur, de préférence l'élément massique thermique (25) est revêtu catalytiquement.

13. Réacteur selon une des revendications 1 à 12, **caractérisé en ce que** le réacteur (9) possède une chambre d'hydrolyse (24) placée en aval de la chambre de thermolyse (23) et dans laquelle de l'acide isocyanique est hydrolysé en ammoniac.

14. Réacteur selon la revendication 13, **caractérisé en ce que** chambre de thermolyse (23) et chambre d'hydrolyse (24) se raccordent l'une à l'autre de manière ouverte.

15. Réacteur selon la revendication 13 ou 14, **caractérisé en ce que** le flux de gaz d'échappement du brûleur (10) débouche directement dans la chambre d'hydrolyse (24).

16. Procédé de réduction d'oxydes d'azote dans le flux de gaz d'échappement (14) de machines à combustion interne (1), en particulier de moteurs diesel, dans lequel de l'ammoniac est introduit dans le flux de gaz d'échappement (14) et, en tant que moyen de réduction sélectif, scinde catalytiquement les oxydes d'azote en formant de l'azote et de l'eau, l'ammoniac étant produit par thermolyse d'une substance émettant de l'ammoniac par scission à l'intérieur d'un réacteur (9), en particulier d'urée sèche ou d'une solution aqueuse d'urée, **caractérisé en ce que** l'énergie calorifique nécessaire pour la scission thermolytique de l'ammoniac est produite par un processus de combustion dans un brûleur (10) intégré dans le réacteur (9) et amenée immédiatement après à une chambre de thermolyse (23) placée en aval du brûleur (10).

17. Procédé selon la revendication 16, **caractérisé en ce que** le processus de combustion a lieu catalytiquement.

18. Procédé selon la revendication 16 ou 17, **caractérisé en ce que** l'énergie calorifique est transportée au lieu de thermolyse en majeure partie par conduction thermique et/ou convection, en particulier par les gaz d'échappement du processus de combustion.

19. Procédé selon une des revendications 16 à 18, **caractérisé en ce que** l'énergie calorifique est en partie stockée au lieu de thermolyse.

20. Procédé selon une des revendications 16 à 19, **caractérisé en ce que** la température du flux de gaz d'échappement (14) est manipulée par commande de la température du processus de combustion.

21. Procédé selon la revendication 20, **caractérisé en ce que** pour commander la température du processus de combustion, une quantité de carburant variable (20) est amenée de manière continue.

22. Procédé selon la revendication 20, **caractérisé en ce que** pour commander la température du processus de combustion, une quantité de carburant constante (20) est amenée de manière discontinue.

23. Procédé selon une des revendications 16 à 22, **caractérisé en ce qu'**une répartition du carburant pour le processus de combustion est réalisée par mouillage d'une structure poreuse.

24. Procédé selon une des revendications 16 à 23, **caractérisé en ce que** de l'oxygène sous pression provenant du flux de gaz d'échappement (14) ou de l'air ambiant est amené pour le processus de combustion.

25. Procédé selon une des revendications 16 à 24, **caractérisé en ce que** la thermolyse est assistée catalytiquement.

26. Procédé selon une des revendications 16 à 25, **caractérisé en ce qu'**une hydrolyse pour le traitement des produits de réaction de la thermolyse est placée en aval de la thermolyse.

27. Procédé selon la revendication 26, **caractérisé en ce que** les gaz d'échappement du processus de combustion sont amenés à l'hydrolyse.

28. Procédé selon une des revendications 16 à 27, **caractérisé en ce que** la thermolyse, de préférence avec hydrolyse consécutive, a lieu en contiguïté directe avec le flux de gaz d'échappement (14) de la machine à combustion interne (1).

29. Procédé selon une des revendications 16 à 27, **caractérisé en ce que** le processus de combustion et la thermolyse, de préférence avec hydrolyse consécutive, ont lieu dans le flux de gaz d'échappement (14) de la machine à combustion interne (1).

30. Procédé selon une des revendications 16 à 29, **caractérisé en ce que** le résidu d'ammoniac après réduction des oxydes d'azote est oxydé.

31. Dispositif pour réaliser un procédé selon une des revendications 16 à 30, comprenant
- un catalyseur SCR (7) qui est intercalé dans le flux de gaz d'échappement (14) et dans lequel les oxydes d'azote sont réduits catalytiquement au moyen d'ammoniac avec formation d'azote et d'eau,
- une unité pour produire de l'ammoniac à partir d'une substance émettant de l'ammoniac par scission, en particulier à partir d'urée (26) ou à partir d'une solution aqueuse d'urée, comprenant un réservoir de stockage pour la substance émettant de l'ammoniac par scission, un réacteur (9) selon une des revendications 1 à 15 et un dispositif de transport pour alimenter le réacteur (9) avec la substance contenue dans le réservoir de stockage,
- une injection de l'ammoniac produit dans le réacteur (9) en amont du catalyseur SCR (7) dans le flux de gaz d'échappement (14).

32. Dispositif selon la revendication 31, **caractérisé en ce que** l'amenée de carburant (11) pour le brûleur (10) est reliée au réservoir de carburant de la machine à combustion interne (1).

33. Dispositif selon la revendication 31 ou 32, **caractérisé en ce que** pour l'alimentation du brûleur (10) en oxygène (21), le brûleur (10) est relié à un turbocompresseur (5) ou à une zone de contre-pression en amont d'un catalyseur (6) dans le flux de gaz d'échappement (14) de la machine à combustion interne (1).

34. Dispositif selon l'une des revendications 31 à 33, **caractérisé en ce que** le réacteur (9) est disposé en amont du catalyseur SCR (7) directement sur la conduite de gaz d'échappement (4) de la machine à combustion interne (1) et la chambre de thermolyse (23) ou la chambre d'hydrolyse (24) débouche directement dans le flux de gaz d'échappement (14) de la machine à combustion interne (1).

35. Dispositif selon l'une des revendications 31 à 33, **caractérisé en ce que** le réacteur (9) et le brûleur (10) sont disposés en amont du catalyseur SCR (7) à l'intérieur de la conduite de gaz d'échappement (4) de la machine à combustion interne (1) dans le flux de gaz d'échappement (14).

36. Dispositif selon l'une des revendications 31 à 35, **caractérisé en ce qu'**un filtre à particules (8) est disposé en aval du catalyseur SCR (7).

37. Dispositif selon la revendication 36, **caractérisé en ce que** le filtre à particules (8) est revêtu catalytiquement pour assister sa régénération.

38. Dispositif selon la revendication 36 ou 37, **caractérisé en ce que** le filtre à particules (8) est revêtu catalytiquement pour l'oxydation du résidu d'ammoniac par le catalyseur SCR (7).
